# EUROPÄISCHE PATENTSCHRIFT

(11) **EP 3 942 656 B1**
(45) Veröffentlichungstag und Bekanntmachung des Hinweises auf die Patenterteilung: **07.10.2026**
(21) Anmeldenummer: 19720050.4
(22) Anmeldetag: 20.03.2019
(51) Int. Cl.: H01S 3/00, H01S 3/106, H01S 3/16, H01S 3/223, B23K 26/035, B23K 26/70

(54) **VERFAHREN ZUM JUSTIEREN EINES LASERSTRAHLS, VORRICHTUNG ZUM BEREITSTELLEN EINES JUSTIERTEN LASERSTRAHLS UND OPTISCHE ANORDNUNG**
METHOD FOR ADJUSTING OF A LASER BEAM, DEVICE FOR PROVIDING AN ADJUSTED LASER BEAM AND OPTICAL ARRANGEMENT
PROCEDE D' AJUSTEMENT D' UN FAISCEAU LASER, DISPOSITIF POUR PRODUIRE UN FAISCEAU LASER REGLE ET AGENCEMENT OPTIQUE

(43) Veröffentlichungstag der Anmeldung: 26.01.2022
(73) Patentinhaber: TRUMPF Lasersystems for Semiconductor Manufacturing GmbH, 71254 Ditzingen (DE)
(72) Erfinder: MÜLLER, Jonathan, 70199 Stuttgart (DE)
(74) Vertreter: Kohler Schmid Möbus Patentanwälte
(86) Internationale Anmeldenummer: PCT/EP2019/056929
(87) Internationale Veröffentlichungsnummer: WO 2020/187405

(56) Entgegenhaltungen:
- WO-A1-2019/048657
- WO-A1-90/12999
- DE-A1- 102015 215 645
- US-A1- 2010 078 577
- US-A1- 2013 064 258

## Beschreibung

Die vorliegende Erfindung betrifft ein Verfahren zum Justieren eines Laserstrahls, eine Vorrichtung zur Bereitstellung eines justierten Laserstrahls sowie eine optische Anordnung, insbesondere eine EUV-Strahlungserzeugungsvorrichtung.

Beim Durchlaufen einer strahlformenden Einrichtung, d.h. einer Einrichtung, welche mindestens eine optische Eigenschaft des Laserstrahls verändert, wird typischerweise auch die Strahlqualität des Laserstrahls beeinflusst (in der Regel verschlechtert). Beim Justieren eines Laserstrahls, der eine solche strahlformende Einrichtung durchläuft, kann daher eine Vielzahl von optischen Randbedingungen und Störfaktoren in der strahlformenden Einrichtung dazu führen, dass die Justage des Laserstrahls auf Designparameter nur eine unzureichende Strahlqualität des aus der strahlformenden Einrichtung austretenden Laserstrahls liefert. Daher werden derartige strahlformende Einrichtungen zum Erreichen einer guten Strahlqualität in der Regel empirisch optimiert, d.h. es werden nur qualitative Kriterien für die Justage angewandt, da quantitative Kriterien nicht zur Verfügung stehen. Auf diese Weise ist die Justage nur von Experten durchzuführen und schwer reproduzierbar.

Aus der US 2013/0146569 A1 ist ein Verfahren zum Justieren eines Laserstrahls bekannt geworden, der in einem Bearbeitungsvorgang auf ein Werkstück einwirkt.

Ein Laserbearbeitungssystem empfängt den Laserstrahl, dem eine Strahlqualitätseigenschaft zugeordnet ist, und justiert den Laserstrahl derart, dass die Strahlqualitätseigenschaft auf der Grundlage einer Eigenschaft des Werkstücks, einer Eigenschaft des Bearbeitungsvorgangs oder einer Kombination aus beiden geändert wird. Bei der Strahlqualitätseigenschaft kann es sich beispielsweise um die Beugungsmaßzahl (M²-Wert) des Laserstrahls oder um das Strahlparameterprodukt handeln.

### Aufgabe der Erfindung

Der Erfindung liegt die Aufgabe zugrunde, ein Verfahren zur Justage eines Laserstrahls, eine Vorrichtung zur Bereitstellung eines justierten Laserstrahls und eine optische Anordnung bereitzustellen, welche eine Justage anhand einer objektiven Strahlqualitätseigenschaft ermöglichen.

### Gegenstand der Erfindung

Ein Aspekt der Erfindung betrifft ein Verfahren zum Justieren eines Laserstrahls, wie in Anspruch 1 definiert.

Erfindungsgemäß wird die Strahlqualität des die strahlformende Einrichtung durchlaufenden Laserstrahls optimiert, indem das Strahlprofil des Laserstrahls nach dem Durchtritt durch die strahlformende Einrichtung vermessen und anhand des vermessenen Strahlprofils eine - objektive bzw. eindeutige - Strahlqualitätseigenschaft des Laserstrahls bestimmt wird, wobei die Strahlqualitätseigenschaft die Abweichung der vermessenen Intensitätsverteilung des Laserstrahls von einer vorgegebenen Intensitätsverteilung ist. Erfindungsgemäß ist vor der strahlformenden Einrichtung %teine verstellbare Optik angeordnet, die von dem Laserstrahl durchlaufen wird und die in Abhängigkeit von der ermittelten Strahlqualitätseigenschaft bzw. dem jeweils ermittelten Wert der Strahlqualitätseigenschaft verstellt wird, um die Strahlqualität zu optimieren. Auf diese Weise ist es möglich, auf subjektive Kriterien für die Justage zu verzichten, ohne die Störeffekte, die in der strahlformenden Einrichtung auftreten, genauer zu kennen.

Grundsätzlich ist es bekannt, mit Hilfe eines Detektors, z.B. mit Hilfe eines Quadranten-Detektors, oder mit Hilfe einer Kamera eine Strahlposition und/oder einen Ausbreitungs-Winkel des Laserstrahls zu bestimmen und auf eine Stelleinrichtung z.B. in Form einer einstellbaren Optik einzuwirken, um die Strahlposition und den Ausbreitungs-Winkel zu stabilisieren. Eine solche Justage basiert jedoch nicht auf der Optimierung der Strahlqualität, sondern lediglich auf einem direkten Feedback-Signal, z.B. einem Offset auf dem Detektor, der es ermöglicht, die Abweichung zwischen einem Ist-Wert und einem Soll-Wert zu minimieren. Ein direkter Zusammenhang zwischen einem Ist-Wert und einem Soll-Wert ist beim Durchlaufen einer strahlformenden Einrichtung jedoch in der Regel nicht gegeben oder dieser Zusammenhang ist sehr komplex. Mit Hilfe der Strahlqualitätseigenschaft als objektivem Kriterium kann hingegen eine Justage erfolgen, ohne das die in der strahlformenden Einrichtung auftretenden Störeffekte genau bekannt sind. Die strahlformende Einrichtung kann für die Justage daher als "black box" betrachtet werden.

Die Verstellung der einstellbaren Optik erfolgt typischerweise automatisiert mit Hilfe eines Optimierungs-Algorithmus, der in einer geeigneten Software und/oder Hardware implementiert ist und der ein Steuersignal zur Ansteuerung der einstellbaren Optik bzw. von zu diesem Zweck vorgesehenen Aktuatoren liefert. Die Optimierung wird typischerweise so lange durchgeführt, bis der vorgegebene Wert der Strahlqualitätseigenschaft und somit das Justage-Ziel oder ein Abbruchkriterium erreicht ist.

Alternativ ist es möglich, dass die einstellbare Optik für die Justage manuell durch einen Bediener verstellt wird. In diesem Fall ist es günstig, dem Bediener eine Arbeitsanweisung zu geben, wie er die einstellbare Optik in Abhängigkeit von dem jeweils ermittelten Wert der Strahlqualitätseigenschaft zu verändern hat. Wenn die einstellbare Optik zur Optimierung der Strahlqualitätseigenschaft mehr als eine Einstellmöglichkeit bietet, ist die manuelle Verstellung bzw. Optimierung in der Praxis nur schwer umsetzbar, da diese zwangsläufig zu vergleichsweise komplexen Arbeitsanweisungen führt.

Bei einer bevorzugten Ausführung wird durch das Verstellen der einstellbaren Optik die Strahlqualitätseigenschaft maximiert oder minimiert. Wie weiter oben beschrieben wurde, wird die einstellbare Optik in der Regel nicht willkürlich verstellt, vielmehr erfolgt eine gerichtete Verstellung der Optik anhand eines Optimierungs-Algorithmus. Die Justage wird hierbei in der Regel in mehreren Justage- bzw. Verstell-Schritten durchgeführt, in denen jeweils auf die einstellbare Optik eingewirkt wird, um (mindestens) eine Eigenschaft des Laserstrahls graduell zu verändern. Die Entscheidung über den Grad/die Richtung der Verstellung, sowie - bei mehreren Verstell-Möglichkeiten - die Auswahl einer geeigneten Verstell-Möglichkeit im nächsten Justage-Schritt kann mittels eines Optimierungs-Algorithmus erfolgen, beispielsweise mittels eines Gradienten-Verfahrens oder dergleichen. Die Justage wird beendet, wenn das Justage-Ziel erreicht ist, d.h. wenn bei der Maximierung bzw. der Minimierung die Strahlqualitätseigenschaft den vorgegebenen Wert erreicht, oder wenn ein Abbruch-Kriterium, beispielsweise eine vorgegebene Anzahl von Justage-Schritten, erreicht worden ist.

Erfindungsgemäß wird als Strahlqualitätseigenschaft eine Abweichung einer Intensitätsverteilung des Laserstrahls auf dem Detektor von einer vorgegebenen Intensitätsverteilung, insbesondere von einer Gauss-Intensitätsverteilung, ermittelt. In diesem Fall wird das Strahlprofil vermessen, indem ein einziges Bild bzw. eine einzige zweidimensionale Intensitätsverteilung auf dem Detektor aufgezeichnet wird. Die Strahlqualitätseigenschaft wird ermittelt, indem die Intensitätsverteilung mit einer vorgegebenen zweidimensionalen, z.B. Gauss-förmigen Intensitätsverteilung verglichen wird. Als vorgegebene Intensitätsverteilung wird in der Regel nicht ein Bild bzw. eine (zweidimensionale) Intensitätsverteilung verwendet, vielmehr wird die vorgegebene Intensitätsverteilung mit Hilfe von (geometrischen) Parametern beschrieben. Neben einer Gauss-förmigen Intensitätsverteilung, die in Bezug auf den Strahlschwerpunkt bzw. den Strahl-Mittelpunkt des Laserstrahls rotationssymmetrisch ist, können auch andere, nicht rotationssymmetrische Intensitätsverteilungen für den Vergleich herangezogen werden. Dies ist günstig, wenn das Strahlprofil des Laserstrahls von einer rotationssymmetrischen Intensitätsverteilung abweicht, z.B. weil der Laserstrahl ein elliptisches Strahlprofil aufweist.

Eine (zweidimensionale) Gauss-Intensitätsverteilung I_{G}(x, y) kann beispielsweise durch folgende Formel beschrieben werden: ${I}_{G} \left(x, y\right) = {I}_{0} EXP \left(\left[{\left(x-{x}_{0}\right)}^{2}+{\left(y-{y}_{0}\right)}^{2}\right]/\left(2 {{w}_{0}}^{2}\right)\right) ,$ (1) wobei I₀, x₀, y₀, w₀ die Parameter der Gauss-Intensitätsverteilung bilden.

Die Abweichung D der detektierten Intensitätsverteilung I(x, y) von der Gauss-Intensitätsverteilung I_{G}(x, y) kann beispielsweise durch nachfolgendes Fehler-Integral ausgedrückt werden: $D = {∬}_{x , y} {\left(I\left(x, y\right)-{I}_{G}\left(x, y\right)\right)}^{2}$ (2)

Die Abweichung in Form der Fehlerfunktion D wird numerisch bestimmt und bei der Justage minimiert.

Bei einer Weiterbildung wird beim Ermitteln der Abweichung mindestens ein Parameter der vorgegebenen Intensitätsverteilung variiert. Grundsätzlich kann beim Ermitteln der Abweichung D eine (unabhängige) Variation eines oder mehrerer der Parameter I₀, x₀, y₀, w₀ der Gauss-Intensitätsverteilung erfolgen, die weiter oben beschrieben definiert sind, oder der eine bzw. die mehreren Parameter können fest vorgegeben werden. Die Festlegung, ob ein bestimmter Parameter variiert wird oder fest vorgegeben wird, wird in Abhängigkeit von den gewünschten Eigenschaften des Laserstrahls getroffen. Beispielsweise können die Zentrums-Position x₀, y₀ und die maximale Intensität I₀ der Gauss-Intensitätsverteilung variiert bzw. frei gewählt werden, während das Maß für den Strahldurchmesser w₀ fest vorgegeben wird.

Es versteht sich, dass abhängig von der jeweiligen Anwendung auch andere Fit- bzw. Fehlerfunktionen (1) und (2) für die numerische Ermittlung der Abweichung D möglich sind. Beispielsweise kann bei einem Laserstrahl mit einer nicht rotationssymmetrischen, z.B. elliptischen Intensitätsverteilung für die Ermittlung der Abweichung D in den beiden Achsrichtungen der Ellipse eine unterschiedliche Gewichtung in Abhängigkeit vom Abstand zum Strahlschwerpunkt erfolgen. Weiterhin kann beispielsweise die detektierte Intensitätsverteilung korrigiert werden, beispielsweise durch Abziehen eines kalibrierten Hintergrundbildes oder es können einzelne Bereiche der Intensitätsverteilung in der Fehlerfunktion unterschiedlich gewichtet werden, entsprechend deren Einfluss auf die tatsächliche Anwendung.

Bei einem nicht erfindungsgemäßen Beispiel wird als Strahlqualitätseigenschaft ein Strahlparameterprodukt oder eine Beugungsmaßzahl bestimmt. Zu diesem Zweck ist es typischerweise erforderlich, das Strahlprofil in Form der Strahlkaustik des Laserstrahls zumindest näherungsweise zu bestimmen. Hierzu wird die Intensitätsverteilung des Laserstrahls in der Regel in einer Mehrzahl von zueinander beabstandeten Ebenen vermessen, wozu der Detektor entlang der Ausbreitungsrichtung des Laserstrahls verschoben werden kann. Alternativ oder zusätzlich können mehrere Bilder bzw. Intensitätsverteilungen auf mehreren Detektoren aufgenommen werden, die in festen Abständen zueinander angeordnet sind. Anhand der Strahlkaustik kann die Beugungsmaßzahl (M²-Wert) des Laserstrahls, d.h. das Verhältnis zwischen dem Divergenzwinkel φ des Laserstrahls im Vergleich zum Divergenzwinkel φ_{G} eines idealen Gauss-Strahls mit gleichem Durchmesser an der Strahltaille bestimmt werden (M² = φ / φ_{G}). Auch das Strahlparameterprodukt ("beam parameter product") BPP = M² λ / π kann auf diese Weise und bei bekannter Laser-Wellenlänge λ ermittelt werden. Im Idealfall kann zu diesem Zweck eine ISO-konforme Kaustik-Messung des Laserstrahls erfolgen.

Alternativ zu den weiter oben beschrieben Strahlqualitätseigenschaften können auch andere (objektive) Strahlqualitätseigenschaften für die Justage verwendet werden. Auch können die weiter oben beschriebenen Strahlqualitätseigenschaften in Abhängigkeit von der jeweiligen Anwendung geeignet modifiziert werden, beispielsweise kann das Randfeld des Laserstrahls nicht berücksichtigt werden, falls dieses für die weitere Propagation des Laserstrahls nicht von Bedeutung ist.

Bei einer weiteren bevorzugten Ausführung wird/werden beim Verstellen der einstellbaren Optik eine Strahlposition des Laserstahls, eine Ausrichtung des Laserstrahls, eine Kaustik des Laserstrahls und/oder ein Abbildungsfehler des Laserstrahls eingestellt. Unter der Strahlposition des Laserstrahls wird eine Position in einer Ebene senkrecht zur Ausbreitungsrichtung des Laserstrahls beim Eintritt in die strahlformende Einrichtung verstanden. Unter der Ausrichtung des Laserstrahls wird ein Eintrittswinkel beim Eintritt des Laserstrahls in die strahlformende Einrichtung verstanden. Unter der Kaustik des Laserstrahls wird ein Öffnungswinkel (Divergenz- bzw. Konvergenzwinkel) des Laserstrahls sowie der Durchmesser des Laserstahls verstanden. Bei dem Abbildungsfehler, der mittels der einstellbaren Optik verändert wird, kann es sich beispielsweise um den Astigmatismus handeln, der in der einstellbaren Optik z.B. mit Hilfe von Zylinder-Linsen oder dergleichen beeinflusst werden kann.

Bei einer weiteren bevorzugten Ausführung wird/werden beim Justieren des Laserstrahls mindestens ein optisches Element, insbesondere mindestens ein Spiegel und/oder mindestens eine Linse, der einstellbaren Optik verstellt. Die einstellbare Optik kann einen oder mehrere einstellbare (Plan-)Spiegel aufweisen. In der Regel erfolgt das Verstellen in diesem Fall durch Verkippen des Spiegels bzw. der Spiegel um eine jeweilige Kipp- bzw. Drehachse, wodurch die Strahlposition und/oder die Ausrichtung des Laserstrahls eingestellt werden kann. Die einstellbare Optik kann auch eine oder mehrere verstellbare Linsen, z.B. sphärische Linsen oder Zylinderlinsen, aufweisen. In diesem Fall erfolgt das Einstellen in der Regel durch eine Verschiebung der jeweiligen Linse entlang der Strahlachse bzw. der Ausbreitungsrichtung des Laserstrahls. Auf diese Weise kann insbesondere die Kaustik des Laserstrahls eingestellt werden. Im Falle von Zylinderlinsen kann ggf. auch der Astigmatismus des Laserstrahls eingestellt werden.

Erfindungsgemäß ist die strahlformende Einrichtung ausgewählt aus der Gruppe umfassend: optischer Verstärker, optischer Isolator, optische Verzögerungsstrecke, optischer Polarisator. Die strahlformende Einrichtung kann beispielsweise eine oder mehrere Aperturen, eine inhomogene optische Verstärkung oder Absorption, nicht-plane reflektierende optische Elemente etc. aufweisen, die nicht-deterministische oder nur mit hohem Aufwand zu berechnende Störeffekte beim Durchtritt des Laserstrahls erzeugen. Bei der strahlformenden Einrichtung kann es sich beispielsweise um einen optischen Verstärker handeln, um einen optischen Isolator, beispielsweise um einen Faraday-Rotator, um einen optischen (Intensitäts-)Modulator, beispielsweise um einen elektro-optischen oder akusto-optischen Modulator, um eine optische Verzögerungsstecke, beispielsweise um eine Multipass-Verzögerungsstrecke, um einen optischen Polarisator, beispielsweise um eine unter dem Brewster-Winkel eingebaute Strahlteilerplatte, etc.

Bei einer weiteren Variante sind die strahlformende Einrichtung und die einstellbare Optik in einem Laser-Resonator angeordnet. Der Laser-Resonator weist zusätzlich ein laseraktives Medium sowie in der Regel zwei Resonator-Spiegel auf, zwischen denen eine Resonator-Strecke gebildet ist. Einer oder beide Resonator-Spiegel können Teil der einstellbaren Optik sein und z.B. verschoben oder verkippt werden, um die Justage durchzuführen. Bei dem Laser-Resonator kann es sich insbesondere um einen Seed-Laser zur Erzeugung eines gepulsten Seed-Laserstrahls handeln, der in einem oder in mehreren optischen Verstärkern verstärkt wird. Der optische Modulator innerhalb des Laser-Resonators dient in der Regel zur Puls-Erzeugung.

Die strahlformende Einrichtung kann selbstverständlich auch im Strahlengang außerhalb eines Laser-Resonators angeordnet sein. Beispielsweise kann es sich um einen optischen Verstärker bzw. um eine Verstärker-Stufe handeln, dem der Laserstrahl von einer (Seed-)Laserquelle, von einer vorausgehenden Verstärker-Stufe, zugeführt wird.

Bei einer weiteren bevorzugten Ausführung wird der (gesamte) Laserstrahl (nur) während der Justage auf den (mindestens einen) Detektor gerichtet oder ein Leistungsanteil des Laserstrahls wird dauerhaft auf den (mindestens einen) Detektor gelenkt.

Im ersten Fall wird typischerweise ein schaltbares optisches Element, beispielsweise in Form eines Kippspiegels, verwendet, welches in den Strahlengang des Laserstrahls eingebracht und aus diesem entfernt werden kann, um den Laserstrahl für die Justage auf den Detektor zu richten oder einer Anwendung zuzuführen. In diesem Fall kann der Strahlengang des Laserstrahls nach dem Durchtritt durch die strahlformende Einrichtung zwischen einem Mess-Strahlengang für die Justage und einem Nutz-Strahlengang zur Nutzung des (justierten) Laserstrahls umgeschaltet werden. In dem Nutz-Strahlengang kann beispielsweise eine (weiterer) optische Verstärker-Stufe angeordnet sein, oder - im Falle einer EUV-Strahlungserzeugungsvorrichtung - z.B. ein Target-Material, insbesondere in Form eines Zinn-Tröpfchens, auf welches der Laserstrahl fokussiert wird.

Im zweiten Fall wird ein (typischerweise geringer) Leistungsanteil des Laserstrahls dauerhaft aus dem (Nutz-)Strahlengang des Laserstrahls ausgekoppelt. Zu diesem Zweck kann beispielsweise eine Auskoppeleinrichtung in Form einer Strahlteiler-Einrichtung dienen. Dies ist insbesondere sinnvoll, wenn die Umlenkung des Laserstrahls auf den Detektor innerhalb des Laser-Resonators erfolgen soll. Die dauerhafte Auskopplung ermöglicht es, die Justage des Laserstrahls während des laufenden Betriebs einer optischen Anordnung vorzunehmen, in der die strahlformende Einrichtung angeordnet ist. In diesem Fall ist es allerdings in der Regel erforderlich, dass die einstellbare Optik in einem jeweiligen Justage-Schritt nur geringfügig verstellt wird, um zu vermeiden, dass bei der Justage ungewollte Auswirkungen auf die jeweilige Anwendung auftreten.

Ein weiterer Aspekt der Erfindung betrifft eine Vorrichtung zur Bereitstellung eines justierten Laserstrahls, wie in Anspruch 9 definiert.

Wie weiter oben beschrieben wurde, ist die manuelle Justage eines Laserstrahls, der eine strahlformende Einrichtung durchläuft, die den Laserstrahl in seinen optischen Eigenschaften ggf. nicht-deterministisch verändert, in der Regel nur von einem Experten durchführbar und schwer reproduzierbar. Die oben beschriebene Vorrichtung zur Bereitstellung eines Laserstrahls ermöglicht eine automatische Justage des Laserstrahls, der die strahlformende Einrichtung durchläuft. Die strahlformende Einrichtung wird daher mit einer Auto-Justageeinheit versehen, welche die Justage selbständig vornimmt, ohne dass ein Bediener in den Justage-Prozess eingreifen muss.

Erfindungsgemäß ist die strahlformende Einrichtung ausgewählt aus der Gruppe umfassend: optischer Verstärker, optischer Isolator und optische Verzögerungsstrecke, optischer Polarisator. Wie weiter oben beschrieben wurde, können bei diesen Einrichtungen insbesondere nicht-deterministische Störeffekte auftreten, deren genaue Kenntnis für die hier beschriebene Justage nicht erforderlich ist.

Erfindungsgemäß weist die einstellbare Optik zur Veränderung der mindestens einen Eigenschaft des Laserstrahls mindestens ein verstellbares optisches Element, insbesondere mindestens eine verstellbare Linse und/oder mindestens einen verstellbaren Spiegel, auf. Zur (automatisierten) Verstellung des mindestens eines optischen Elements wird typischerweise mindestens ein Aktor bzw. ein motorischer Antrieb verwendet. Die Auswerteeinrichtung, die in einer geeigneten Soft- und/oder Hardware realisiert ist, beispielsweise in Form eines Computerprogramms, eines programmierbaren Bauteils, z.B. in Form eines FPGA, etc., erzeugt ein Steuersignal zur Ansteuerung des Aktuators bzw. des motorischen Antriebs, um die Verstellung des mindestens einen optischen Elements zu bewirken.

Der Aktuator kann beispielsweise ausgebildet sein, das optische Element zu verschieben und/oder zu drehen. Zu diesem Zweck kann ein jeweiliger Halter für das optische Element mittels des Aktuators verschiebbar und/oder drehbar ausgebildet sein. Der Aktuator kann auch auf das optische Element einwirken, um dessen Geometrie zu verändern, beispielsweise um den Krümmungsradius einer Linse oder eines Spiegels zu verändern. Die einstellbare Optik kann insbesondere zwei optische Elemente aufweisen, die ein Strahlteleskop bilden, d.h. die im Wesentlichen im Abstand ihrer Brennweiten voneinander angeordnet sind, wobei eines oder beide der optischen Elemente entlang der Strahlachse des Laserstrahls verschiebbar sind.

Bei einer weiteren Ausführungsform umfasst die Vorrichtung, genauer gesagt die Detektoreirichtung, ein schaltbares optisches Element zur Ausrichtung des Laserstrahls auf den Detektor (nur) während der Justage und/oder eine Strahlteiler-Einrichtung zum (dauerhaften) Lenken eines Leistungsanteils des Laserstrahls auf den Detektor. Wie weiter oben beschrieben wurde, wird im ersten Fall der Strahlengang des Laserstrahls mit Hilfe des schaltbaren optischen Elements zwischen einem Nutz-Strahlengang und einem Mess-Strahlengang umgeschaltet. Im zweiten Fall wird mittels der Strahlteiler-Einrichtung ein in der Regel geringer Leistungsanteil des Laserstrahls aus dem Nutz-Strahlengang ausgekoppelt und dem Detektor zugeführt.

Die Auswerteeinrichtung kann ausgebildet sein, beim Verstellen der einstellbaren Optik die Strahlqualitätseigenschaft zu maximieren oder zu minimieren. Wie weiter oben in Zusammenhang mit dem Verfahren beschrieben wurde, kann zu diesem Zweck in der Auswerteeinrichtung ein Optimierungs-Algorithmus ausgeführt werden, der die Verstellung der einstellbaren Optik in Abhängigkeit von der Strahlqualitätseigenschaft steuert.

Erfindungsgemäß ist die Auswerteeinrichtung ausgebildet, als Strahlqualitätseigenschaft eine Abweichung einer Intensitätsverteilung des Laserstrahls auf dem Detektor von einer vorgegebenen Intensitätsverteilung, insbesondere von einer Gauss-Intensitätsverteilung, zu bestimmen. Insbesondere kann die Auswerteeinrichtung ausgebildet sein, beim Ermitteln der Abweichung mindestens einen Parameter der vorgegebenen Intensitätsverteilung zu variieren. Die numerisch bestimmte Abweichung der Intensitätsverteilung von einer Gauss-Intensitätsverteilung stellt ein besonders einfaches Kriterium für die Strahlqualität des Laserstrahls dar. Für die Bestimmung der Strahlqualitätseigenschaft ist es in diesem Fall ausreichend, mit Hilfe des Detektors, beispielsweise in Form einer Kamera, ein einziges Bild der Intensitätsverteilung des Laserstrahls aufzunehmen.

Bei einem nicht erfindungsgemäßen Beispiel kann die Auswerteeinrichtung ausgebildet sein, als Strahlqualitätseigenschaft ein Strahlparameterprodukt oder eine Beugungsmaßzahl des Laserstrahls zu bestimmen. In diesem Fall wird das Strahlprofil in Form der Kaustik des Laserstrahls entlang seiner Ausbreitungs- bzw. Strahlrichtung vermessen. Der Detektor (beispielsweise eine Kamera) ist in diesem Fall in der Regel in Ausbreitungsrichtung des Laserstrahls verschiebbar ausgebildet, um die Intensitätsverteilung des Laserstrahls in mehreren zueinander versetzten Ebenen bestimmen zu können. Die Vorrichtung kann auch zwei oder mehr in Strahlrichtung des Laserstrahls voneinander beabstandete Detektoren aufweisen, um die Intensitätsverteilung in mehreren zueinander versetzten Ebenen zu bestimmen. Die Bestimmung des Strahlparameterprodukts und/oder der Beugungsmaßzahl kann insbesondere in Form einer ISO-konformen Kaustik-Messung erfolgen.

Ein weiterer Aspekt der Erfindung betrifft eine optische Anordnung, insbesondere eine EUV-Strahlungserzeugungsvorrichtung, umfassend: mindestens zwei Vorrichtungen, die wie weiter oben beschrieben ausgebildet sind und die bevorzugt im Strahlweg des Laserstrahls aufeinander folgend angeordnet sind, wie in Anspruch 15 definiert. In diesem Fall, bei dem zwei oder mehr Vorrichtungen nacheinander (sequentiell bzw. in einer Kette) von dem Laserstrahl durchlaufen werden, kann jede der Vorrichtungen einzeln, d.h. individuell, justiert werden. Bei einer Kette von Vorrichtungen bzw. von strahlformenden Einrichtungen, beispielsweise in Form von optischen Verstärkern bzw. von Verstärker-Stufen, ist es in der Regel erforderlich, bei einem Ausfall bzw. einer Reparatur eines Verstärkers, der z.B. am Anfang der Kette angeordnet ist, die komplette Kette, d.h. alle nachfolgenden Verstärker, neu zu justieren, was einen sehr hohen Zeitverlust zur Folge hat. Bei der hier beschriebenen optischen Anordnung kann dadurch Abhilfe geschaffen werden, dass zumindest die ausfallkritischsten strahlformenden Einrichtungen mit der weiter oben beschriebenen Auto-Justagefunktion ausgestattet werden. Zu diesem Zweck ist es erforderlich, eine ggf. bereits vorhandene Optik vor der jeweiligen strahlformenden Einrichtung einstellbar auszubilden und nach der jeweiligen strahlformenden Einrichtung eine Detektionseinrichtung mit mindestens einem Detektor anzuordnen. Die Auswerteeinrichtung, die mit dem Detektor verbunden ist, um die Strahlqualitätseigenschaft zu bestimmen, kann in die optische Anordnung, beispielsweise in eine dort vorhandene Maschinensteuerung, integriert werden, welche auch die Ansteuerung der einstellbaren Optik ermöglicht. Im Idealfall entfallen auf diese Weise alle mechanischen Tätigkeiten für die Justage dieser Vorrichtungen. Insbesondere kann die Justage als regelmäßige Auto-Justage mit fest vorgegebenen Justage-Zyklen durchgeführt werden oder alternativ beim Unter- oder Überschreiten eines festgelegten Leistungskriteriums, wie beispielsweise optische Transmission /Verstärkung, optische Strahlqualität, usw. der optischen Anordnung.

Falls keine Integration in die Maschinensteuerung erfolgt, kann ggf. die Auswerteeinrichtung auf einem mobilen Computer (Laptop) installiert sein bzw. ablaufen, der mit dem jeweiligen Detektor und ggf. mit der einstellbaren Optik signaltechnisch verbunden ist. Auch in diesem Fall wird einem unerfahrenen Bediener ermöglicht, die Justage eigenständig durchzuführen. Durch die Bestimmung der objektiven Strahlqualitätseigenschaft wird der Bediener bei der ggf. manuell durchgeführten Justage durch das Verstellen der einstellbaren Optik unterstützt, so dass insbesondere die kritischen Justage-Schritte deutlich beschleunigt werden können.

Bei der optischen Anordnung kann es sich insbesondere um eine EUV-Strahlungserzeugungsvorrichtung zur Erzeugung von EUV-Strahlung handeln. Eine solche EUV-Strahlungserzeugungsvorrichtung weist typischerweise eine Vakuum-Kammer auf, in die zur Erzeugung von EUV-Strahlung ein Target-Material, z.B. in Form von Zinn-Tröpfchen, in einen Zielbereich einbringbar ist. Die EUV-Strahlungserzeugungsvorrichtung weist eine Strahlführungseinrichtung zur Führung (mindestens) eines Laserstrahls in den Zielbereich auf, um das Target-Material in einen Plasma-Zustand zu überführen und hierbei die EUV-Strahlung zu erzeugen. Die EUV-Strahlungserzeugungsvorrichtung weist in der Regel eine Seed-Laserquelle zur Erzeugung eines gepulsten Seed-Laserstrahls auf, der in einer Mehrzahl von optischen Verstärkern (in mehreren Verstärker-Stufen) verstärkt wird, bevor der Laserstrahl mittels einer Fokussiereinrichtung in dem Zielbereich fokussiert wird. Bei einer solchen EUV-Strahlungserzeugungsvorrichtung sind in der Regel mehrere strahlformende Einrichtungen vorhanden, beispielsweise in Form der Seed-Laserquelle bzw. eines dort angeordneten optischen Modulators, in Form von einem oder von mehreren optischen Verstärkern (Koaxial-Verstärkern oder Leistungs-Verstärkern) sowie ggf. in Form eines optischen Isolators, z.B. in Form eines Faraday-Rotators.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein Blockschaltbild einer Vorrichtung zur Bereitstellung eines justierten Laserstrahls mit einer strahlformenden Einrichtung in Form eines optischen Verstärkers, einer einstellbaren Optik und einem ortsauflösenden Detektor,
- Fig. 2: ein nicht-erfindunggemäßes Beispiel zeigt ein Blockschaltbild analog zu Fig. 1 mit einer strahlformenden Einrichtung in Form eines in einem Laser-Resonator angeordneten elektro-optischen Modulators,
- Fig. 3a: eine schematische Darstellung einer mit dem ortsauflösenden Detektor gemessenen zweidimensionalen Intensitätsverteilung des Laserstrahls,
- Fig. 3b: einen eindimensionalen Schnitt durch die Intensitätsverteilung von Fig. 3a sowie eine Gauss-Intensitätsverteilung,
- Fig. 4: eine Darstellung einer EUV-Strahlungserzeugungsvorrichtung, die eine Vorrichtung gemäß Fig. 1 sowie eine Vorrichtung gemäß Fig. 2 aufweist.

In der folgenden Beschreibung der Zeichnungen werden für gleiche bzw. funktionsgleiche Bauteile identische Bezugszeichen verwendet.

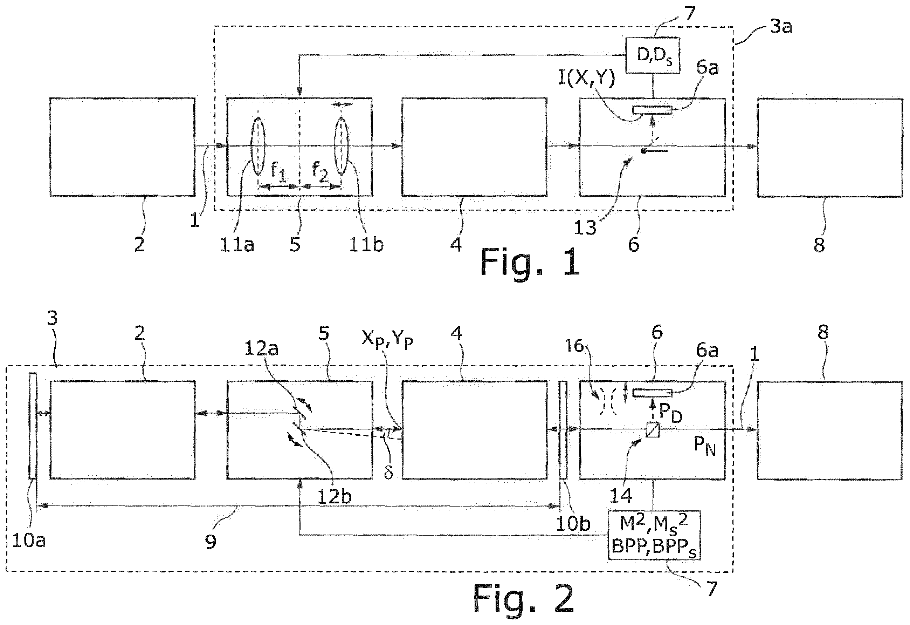

**Fig. 1** zeigt ein Blockschaltbild mit fünf Blöcken bzw. optischen Modulen, die nacheinander von einem Laserstrahl **1** durchlaufen werden. Der erste Block bildet eine Strahlquelle **2** zur Bereitstellung des Laserstrahls 1 mit definierten optischen Eigenschaften bzw. mit einer vorgegebenen Strahlqualität. Bei der Strahlquelle 2 kann es sich beispielsweise um eine Laserquelle handeln oder um ein anderes optisches Modul, welches einen Laserstrahl 1 mit einer vorgegebenen Strahlqualität bereitstellt. Der zweite, dritte und vierte Block bilden gemeinsam eine Vorrichtung **3a** zur Bereitstellung eines justierten Laserstrahls 1. Die Vorrichtung 3a umfasst eine strahlformende Einrichtung **4** in Form eines optischen Verstärkers. Der optische Verstärker 4 erzeugt z.B. durch eine inhomogene Verstärkung Störeffekte, welche die Strahlqualität des Laserstrahls 1 beeinflussen, genauer gesagt verschlechtern. Um den Laserstrahl 1 zu justieren, so dass dieser mit einer gewünschten Strahlqualität aus der Vorrichtung 3a austritt, ist vor dem optischen Verstärker 4 eine einstellbare Optik **5** und nach dem optischen Verstärker 4 eine Detektoreinrichtung **6** angeordnet, die mit einer Auswerteeinrichtung **7** in signaltechnischer Verbindung steht. Der aus der Vorrichtung 3a austretende, justierte Laserstrahl 1 wird einem fünften Block zugeführt, bei dem es sich im gezeigten Beispiel um eine weitere strahlformende Einrichtung **8** in Form eines weiteren optischen Verstärkers handelt.

**Fig. 2** zeigt ein nicht-erfindunggemäßes Beispiel, mit einem Blockschaltbild, das sich von dem in Fig. 1 gezeigten Blockschaltbild im Wesentlichen dadurch unterscheidet, dass es sich bei dem ersten Block um ein laseraktives Medium 2 handelt, das in einem Laser-Resonator **9** angeordnet ist. Der Laser-Resonator 9 wird durch zwei Endspiegel **10a,b** begrenzt, von denen der zweite Endspiegel 10b teildurchlässig ist, so dass dieser einen Auskoppelspiegel zur Auskopplung des Laserstrahls 1 aus dem Laser-Resonator 9 bildet. Alternativ kann die Auskopplung des Laserstrahls 1 aus dem Laser-Resonator 9 auch an einem (Polarisations-)Strahlteiler erfolgen. Dies ist häufig der Fall, wenn in dem Laser-Resonator 9 zur Erzeugung von ultrakurzen Laserpulsen eine strahlformende Einrichtung in Form eines optischen Modulators 4, beispielsweise eines elektro-optischen Modulators oder eines akusto-optischen Modulators, angeordnet ist, wie dies in Fig. 2 der Fall ist. Wie in Fig. 2 ebenfalls zu erkennen ist, ist auch die einstellbare Optik 5 der Vorrichtung 3 innerhalb des Laser-Resonators 9 angeordnet, während die Detektionseinrichtung 6 außerhalb des Laser-Resonators 9 angeordnet ist. Letzteres ist jedoch nicht zwingend notwendig, d.h. auch die Detektionseinrichtung 6 kann innerhalb des Laser-Resonators 9 angeordnet sein. Bei dem in Fig. 2 gezeigten Beispiel umfasst die Vorrichtung 3 zur Bereitstellung des justierten Laserstrahls 1 den Laser-Resonator 9, die ersten vier Blöcke des Blockschaltbilds, d.h. auch das laseraktive Medium 2, sowie die Auswerteeinrichtung 7. Die Vorrichtung 3 bildet somit eine (Seed-)Laserquelle zur Bereitstellung eines gepulsten (Seed-)Laserstrahls 1. Es versteht sich, dass die Anordnung des laseraktiven Mediums 2, der einstellbaren Optik 5 und der strahlformenden Einrichtung 4 in dem Laser-Resonator 9 grundsätzlich beliebig ist. Insbesondere kann es sich bei dem laseraktiven Medium 2 um einen Festkörper oder um ein gasförmiges laseraktives Medium handeln.

Die einstellbare Optik 5 weist mindestens ein verstellbares optisches Element auf und kann auf unterschiedliche Weise ausgebildet sein. Bei dem in Fig. 1 dargestellten Blockschaltbild umfasst die einstellbare Optik 5 zwei transmittierende optische Elemente in Form von Linsen **11a,b,** die ein Strahlteleskop bilden und die (nominell) im Abstand ihrer Brennweiten **f₁**, **f₂** voneinander angeordnet sind. Bei dem in Fig. 1 dargestellten Beispiel handelt es sich um sphärische Linsen 11a,b, von denen die zweite Linse 11b entlang des Strahlwegs bzw. entlang der Ausbreitungsrichtung des Laserstrahls 1 verschiebbar ist. Für die Verschiebung der zweiten Linse 11b dient ein motorischer Antrieb, der in Fig. 1 durch einen Doppelpfeil angedeutet ist. Zusätzlich oder alternativ kann auch die im Strahlweg erste Linse 11a verstellbar, insbesondere verschiebbar, ausgebildet sein und/oder es können beide Linsen 11a,b entlang der Ausbreitungsrichtung des Laserstrahls 1 verschoben werden. Durch die Verschiebung der zweiten Linse 11b kann die Kaustik des Laserstrahls 1 beeinflusst werden, d.h. es kann aus einem kollimierten Laserstrahl 1 ein (geringfügig) konvergenter oder divergenter Laserstrahl 1 erzeugt werden. Bei der Verwendung von asphärischen Linsen bzw. von Zylinderlinsen können weitere Eigenschaften des Laserstrahls 1 beeinflusst werden. Beispielsweise können mit Hilfe von verschiebbaren Zylinderlinsen gezielt optische Abbildungsfehler, z.B. Astigmatismus, erzeugt bzw. korrigiert werden.

Bei der Darstellung von Fig. 2 weist die einstellbare Optik 5 zwei Umlenkspiegel **12a,b** auf, von denen beide verstellbar ausgebildet sind und mittels jeweils eines motorischen Drehantriebs, der in Fig. 2 durch einen Doppelpfeil angedeutet ist, um jeweils eine senkrecht zur Zeichenebene verlaufende Drehachse gedreht werden können. Wird nur der zweite Umlenkspiegel 12b verdreht, kann ein Einfallswinkel **δ** des Laserstrahls 1 beim Eintritt in die strahlformende Einrichtung 4 eingestellt werden. Hierbei verändert sich auch eine Strahlposition **X_{P}**, **Y_{P}** des Laserstrahls 1 beim Eintritt in die strahlformende Einrichtung 4. Werden beide Umlenkspiegel 12a,b geeignet verdreht, kann eine Parallelverschiebung des Laserstrahls 1 erzeugt werden, um die Strahlposition X_{P}, Y_{P} beim Eintritt in die strahlformende Einrichtung 4 unabhängig vom Eintrittswinkel δ des Laserstrahls 1 einzustellen.

Die in Fig. 1 und Fig. 2 gezeigte Detektoreinrichtung 6 weist einen ortsauflösenden Detektor **6a** in Form einer Kamera auf, der mit der Auswerteeinrichtung 7 in signaltechnischer Verbindung steht. Die in Fig. 1 gezeigte Detektoreinrichtung 6 weist ein schaltbares optisches Element in Form eines verkippbaren Umlenkspiegels **13** auf, der aus einer in Fig. 1 gezeigten Stellung, in der dieser außerhalb des Strahlengangs des Laserstrahls 1 angeordnet ist, mittels eines motorischen Antriebs in eine in Fig. 1 gestrichelt angedeutete Stellung verkippbar ist, in welcher der Umlenkspiegel 13 im Strahlengang des Laserstrahls 1 angeordnet ist und den Laserstrahl 1 während der Justage auf den Detektor 6a ausrichtet.

Die in Fig. 2 dargestellte Detektoreinrichtung 6 unterscheidet sich von der in Fig. 1 dargestellten Detektoreinrichtung 6 im Wesentlichen dadurch, dass an Stelle der schaltbaren Einrichtung 13 eine Strahlteiler-Einrichtung **14** zur (dauerhaften) Ausrichtung des Laserstrahls 1 auf den Detektor 6a vorgesehen ist. Die Strahlteiler-Einrichtung 14 ist im gezeigten Beispiel als Polarisations-Strahlteiler ausgebildet und ermöglicht es, einen vorgegebenen Leistungsanteil **P_{D}** (beispielsweise < 1 %) des Laserstrahls 1 auf den Detektor 6a auszurichten, während ein deutlich größerer Leistungsanteil **P_{N}** als Nutzleistung beim Austritt des (justierten) Laserstrahls 1 aus der Vorrichtung 3 zur Verfügung steht.

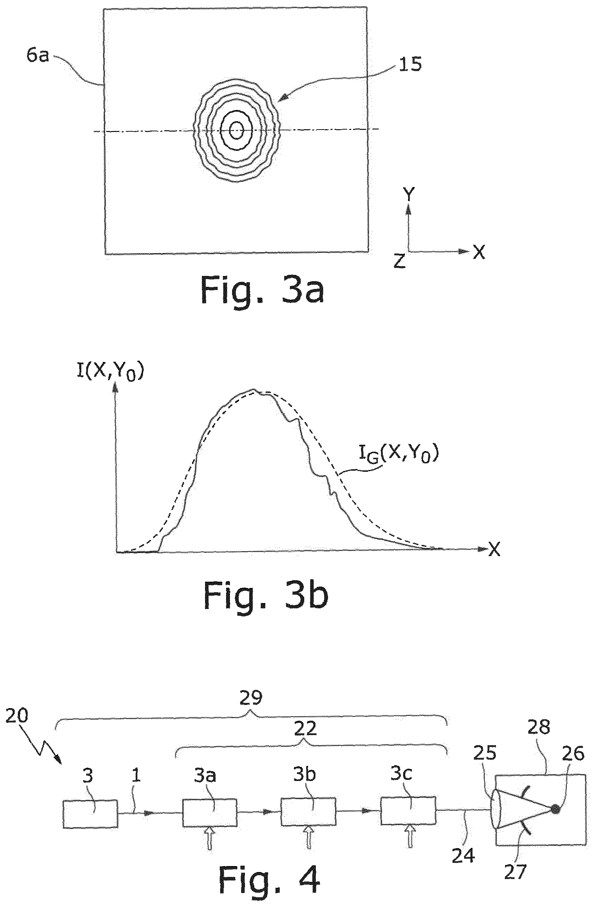

**Fig. 3a** zeigt ein Strahlprofil **15** des Laserstrahls 1 auf einer Detektorfläche des Detektors 6a von Fig. 1, d.h. in einer Ebene senkrecht zur Ausbreitungsrichtung **z** des Laserstrahls 1. In der Darstellung von Fig. 3a ist das Strahlprofil 15 durch Linien mit konstanter Intensität einer Intensitätsverteilung **I(x, y)** des Laserstrahls 1 dargestellt, die von dem Detektor 6a in Form einer Kamera ortsaufgelöst gemessen wird. **Fig. 3b** zeigt einen eindimensionalen Schnitt durch die Intensitätsverteilung I(x, y) entlang einer in X-Richtung verlaufenden, in Fig. 3a strichpunktiert dargestellten Linie in der Mitte der Detektorfläche (d. h. bei y₀ = 0). Wie in Fig. 3b zu erkennen ist, verläuft die Intensitätsverteilung I(x, y₀) unregelmäßig und weicht von einer (radialsymmetrischen) Gauss-Intensitätsverteilung **I_{G}(x, y)** ab, von der in Fig. 3b ebenfalls ein eindimensionaler Schnitt in X-Richtung I_{G}(x, y₀) dargestellt ist (y₀ =0).

Die zweidimensionale Gauss-Intensitätsverteilung I_{G}(x, y) kann durch nachfolgende Formel beschrieben werden: ${I}_{G} \left(x, y\right) = {I}_{0} EXP \left(\left[{\left(x-{x}_{0}\right)}^{2}+{\left(y-{y}_{0}\right)}^{2}\right]/\left(2 {{w}_{0}}^{2}\right)\right) ,$ (2) wobei I₀, x₀, y₀, w₀ die Parameter der Gauss-Intensitätsverteilung I_{G}(x, y) bilden.

Die Parameter x₀ und y₀ können in erster Näherung mit dem Mittelpunkt der Detektorfläche (x₀ = y₀ = 0) identifiziert werden. Auch die Parameter I₀ und w₀ können vorgegeben werden, beispielsweise indem der Detektor 6a zur Kalibration mit einem Laserstrahl 1 mit gaussförmigem Strahlprofil bestrahlt wird.

Die Abweichung D der detektierten zweidimensionalen Intensitätsverteilung I(x, y) von der Gauss-Intensitätsverteilung I_{G}(x, y) kann beispielsweise durch nachfolgendes Fehler-Integral bzw. Funktional ausgedrückt werden: $D = {∬}_{x , y} {\left(I\left(x, y\right)-{I}_{G}\left(x, y\right)\right)}^{2} ,$ (2) wobei I_{G}(x, y) wie in Gleichung (1) parametrisiert ist.

Für die Justage des Laserstrahls 1 anhand des in Fig. 3a gezeigten Strahlprofils 15 auf dem Detektor 6a kann folgender Verfahrensablauf durchgeführt werden:
Zunächst durchläuft der Laserstrahl 1 die strahlformende Einrichtung 4 und das Strahlprofil 15 in Form der Intensitätsverteilung I(x, y) wird mit Hilfe des Detektors 6a vermessen. In einem nachfolgenden Schritt wird die Strahlqualitätseigenschaft in Form der Abweichung D anhand der Intensitätsverteilung I(x, y) und anhand der Gleichungen (1) und (2) ermittelt. Es wird geprüft, ob die Abweichung D einen vorgegebenen Wert **Ds** erreicht hat, der dem Justage-Ziel entspricht.

Ist dies nicht der Fall, wird ein Justage-Schritt durchgeführt, bei dem die einstellbare Optik 5 verstellt wird, beispielsweise indem die zweite Linse 11b in Fig. 1 nach rechts verschoben wird. Die Entscheidung, auf welche Weise die einstellbare Optik 5 verstellt wird, wird von einem Optimierungs-Algorithmus in Abhängigkeit von der ermittelten Abweichung D, genauer gesagt von dem jeweils ermittelten Wert der Abweichung D, sowie ggf. in Abhängigkeit von der bei jeweiligen vorausgehenden Justage-Schritten ermittelten Abweichung D ermittelt.

In einem nachfolgenden Schritt wird die Abweichung D und somit die Auswirkung der Verstellung der einstellbaren Optik 5 auf die Strahlqualität erneut ermittelt. Ist das Justage-Ziel erreicht, d.h. ist die Abweichung D kleiner als der vorgegebenen Wert Ds, wird die Justage beendet. Ist dies nicht der Fall, wird anhand des Werts der Abweichung D (sowie anhand der in dem vorhergehenden Justage-Schritt ermittelten Abweichung) von dem Optimierungs-Algorithmus erneut eine Entscheidung darüber getroffen, auf welche Weise die einstellbare Optik 5 verstellt wird. Für den Fall, dass die Abweichung D bei der letzten Verstellung der einstellbaren Optik 5 zugenommen hat, kann eine entgegengesetzte Verstellung erfolgen, z.B. eine Verschiebung der zweiten Linse 11b der einstellbaren Optik 5 von Fig. 1 nach links, um die Abweichung D zu verringern. Die Auswahl über die Richtung und den Betrag der Verschiebung der zweiten Linse 11b trifft hierbei der Optimierungs-Algorithmus, der die Abweichung D iterativ minimiert und die Justage abbricht, wenn das Justage-Ziel erreicht ist, d.h. wenn die Abweichung D den vorgegebenen Wert Ds erreicht.

Die Schritte des oben beschriebenen Verfahrens, insbesondere der Optimierungs-Algorithmus, können in der Auswerteeinrichtung 7 durchgeführt werden. Die Auswerteeinrichtung 7 kann beispielsweise in Form einer geeigneten Soft- und/oder Hardware (z.B. Steuerungscomputer) implementiert sein. Beim Ermitteln der Abweichung D gemäß Gleichung (1) kann mindestens einer der Parameter I₀, x₀, y₀, w₀ der Gauss-Intensitätsverteilung I_{G}(x, y) variiert werden, um die Abweichung D von der jeweils gemessenen Intensitätsverteilung I(x, y) zu minimieren, dies ist aber nicht zwingend erforderlich.

Bei der in Zusammenhang mit Fig. 3a,b beschriebenen Strahlqualitätseigenschaft in Form der Abweichung D handelt es sich um ein besonders einfaches Kriterium für die Strahlqualität des Laserstrahls 1, das ohne großen Aufwand ermittelt werden kann.

Alternativ kann als Strahlqualitätseigenschaft eine Abweichung eines Strahlprofils **16** in Ausbreitungsrichtung z des Laserstrahls 1 in Form einer Strahlkaustik von einem vorgegebenen Strahlprofil, insbesondere von einem Gauss-Strahlprofil, ermittelt werden, wie dies in Fig. 2 dargestellt ist. In diesem Fall wird die Strahlkaustik des Laserstrahls 1 vermessen, indem die Intensitätsverteilung I(x, y) bzw. der Strahldurchmesser des Laserstrahls 1 in mehreren in Ausbreitungsrichtung z zueinander versetzten Ebenen gemessen wird. Für die Kaustik-Messung kann der in Fig. 2 gezeigte Detektor 6a mittels eines motorischen Antriebs entlang einer geeigneten Führung verschoben werden, wie dies durch einen Doppelpfeil angedeutet ist. Anhand der Strahlkaustigk 16 des Laserstrahls 1 kann auf bekannte Weise der M²-Wert des Laserstrahls, d.h. das Verhältnis zwischen dem Divergenzwinkel φ des Laserstrahls im Vergleich zum Divergenzwinkel φ_{G} eines idealen Gauss-Strahls mit gleichem Durchmesser an der Strahltaille bestimmt werden, d.h. **M²** = φ / φ_{G}. Auch das Strahlparameterprodukt ("beam parameter product") **BPP** = M² λ / π kann auf diese Weise (und anhand der bekannten Wellenlänge λ des Laserstrahls 1) ermittelt werden. Im Idealfall kann eine ISO-konforme Kaustik-Messung des Laserstrahls 1 erfolgen. Die Justage des Laserstrahls 1 bzw. die Optimierung kann analog zur weiter oben für die Abweichung D beschriebenen Weise erfolgen, d.h. das Strahlparameterprodukt BPP bzw. die Beugungsmaßzahl M² werden verringert bzw. minimiert, bis diese einen vorgegebenen Wert **BPPs** bzw. **Ms²** erreichen.

**Fig. 4** zeigt eine optische Anordnung in Form einer EUV-Strahlungserzeugungsvorrichtung **20,** die eine Seed-Laserquelle 3 zur Bereitstellung bzw. zur Erzeugung eines (justierten) Laserstrahls 1 aufweist, die wie die in Fig. 2 dargestellte Vorrichtung 3 ausgebildet ist. Bei dem Laserstrahl 1 handelt es sich im gezeigten Beispiel um einen CO₂-Laserstrahl, der mittels eines gasförmigen laseraktiven Mediums 2 (vgl. Fig. 2) erzeugt wird. Die EUV-Strahlungserzeugungsvorrichtung 20 umfasst zusätzlich zu der Seed-Laserquelle 3 eine Verstärkeranordnung **22** mit drei optischen Verstärkern bzw. Verstärkerstufen 3a, **3b, 3c,** eine nicht näher dargestellte Strahlführungseinrichtung **24** sowie eine Fokussiereinrichtung **25.** Die Fokussiereinrichtung 25 dient dazu, den von der Seed-Laserquelle 3 erzeugten und von den Verstärkeranordnung 22 verstärkten Laserstrahl 1 in einem Zielbereich in einer Vakuum-Kammer **28** zu fokussieren, in dem ein Target-Material **26** eingebracht ist. Das Target-Material 26 geht bei der Bestrahlung mit dem Laserstrahl 1 in einen Plasma-Zustand über und emittiert hierbei EUV-Strahlung, die mittels eines Kollektorspiegels **27** fokussiert wird. Die Seed-Laserquelle 3 bildet gemeinsam mit der Verstärkeranordnung 22 eine Treiberlaseranordnung **29** der EUV-Strahlungserzeugungsvorrichtung 20.

Bei der in Fig. 4 gezeigten EUV-Strahlungserzeugungsvorrichtung 20 ist die erste Verstärker-Stufe 3a wie die in Fig. 1 gezeigte Vorrichtung 3a ausgebildet, d.h. die erste Verstärker-Stufe 3a ermöglicht eine Auto-Justage des Laserstrahls 1. Dies ist günstig, da nach einer Reparatur der ersten Verstärker-Stufe 3a nur die erste Verstärker-Stufe 3a auf die weiter oben beschriebene Weise justiert werden muss, ohne dass auch eine Justage der nachfolgenden Verstärker-Stufen 3b, 3c erforderlich ist. Es versteht sich, dass ggf. auch die zweite und dritte Verstärker-Stufe 3b, 3c auf die in Fig. 1 gezeigte Weise ausgebildet sein können. Auch andere strahlformende Einrichtungen 4 als der in Fig. 1 beschriebene optische Verstärker oder der in Fig. 2 beschriebene elektro-optische Modulator können auf die weiter oben beschriebene Weise justiert werden, beispielsweise optische Isolatoren, optische (Multipass-)Verzögerungsstrecken, optische Polarisatoren, etc., die ebenfalls in der EUV-Strahlungserzeugungsvorrichtung 20 oder in einer anderen optischen Anordnung vorgesehen sein können.

## Patentansprüche

1. Verfahren zum Justieren eines Laserstrahls (1), umfassend:
Vermessen eines Strahlprofils (15, 16) des Laserstrahls (1) nach dem Durchlaufen einer strahlformenden Einrichtung (4) mittels mindestens eines ortsauflösenden Detektors (6a) einer Detektoreinrichtung (6), Ermitteln einer Strahlqualitätseigenschaft (D) des Laserstrahls (1), wobei als Strahlqualitätseigenschaft eine Abweichung (D) einer Intensitätsverteilung (I(x,y)) des Laserstrahls (1) auf dem Detektor (6a) von einer vorgegebenen Intensitätsverteilung ermittelt wird, sowie
Verstellen eine einstellbaren Optik (5) zum Verändern mindestens einer Eigenschaft (xp, y_{P}, δ) des Laserstrahls (1) vor dem Eintreten in die strahlformende Einrichtung (4),
wobei zum Justieren des Laserstrahls (1) die einstellbare Optik (5) in Abhängigkeit von der ermittelten Strahlqualitätseigenschaft (D) insbesondere mehrmals verstellt wird, bis die Strahlqualitätseigenschaft (D) einen vorgegebenen Wert (D_{S}) erreicht, wobei die strahlformende Einrichtung (4) ausgewählt ist aus der Gruppe umfassend: optischer Verstärker, optischer Isolator, optische Verzögerungsstrecke, optischer Polarisator.

2. Verfahren nach Anspruch 1, bei dem beim Justieren des Laserstrahls (1) die Strahlqualitätseigenschaft (D) maximiert oder minimiert wird.

3. Verfahren nach Anspruch 1 oder 2, bei dem als Strahlqualitätseigenschaft eine Abweichung (D) einer Intensitätsverteilung (I(x,y)) des Laserstrahls (1) auf dem Detektor (6a) von einer Gauss-Intensitätsverteilung (I_{G}(x, y)) ermittelt wird.

4. Verfahren nach einem der vorhergehenden Ansprüche, bei dem beim Ermitteln der Abweichung (D) in Form einer Fehlerfunktion mindestens ein Parameter (I₀, x₀, y₀, w₀) der vorgegebenen Intensitätsverteilung (I_{G}(x, y)) variiert wird.

5. Verfahren nach einem der vorhergehenden Ansprüche, bei dem beim Verstellen der einstellbaren Optik (5) eine Strahlposition (x_{P}, y_{P}) des Laserstahls (1), eine Ausrichtung (δ) des Laserstrahls (1), eine Kaustik des Laserstrahls (1) und/oder ein Abbildungsfehler des Laserstrahls (1) eingestellt werden.

6. Verfahren nach einem der vorhergehenden Ansprüche, bei dem beim Justieren des Laserstrahls (1) mindestens ein optisches Element, insbesondere mindestens ein Spiegel (12a,b) und/oder mindestens eine Linse (11b), der einstellbaren Optik (5) verstellt wird/werden.

7. Verfahren nach einem der vorhergehenden Ansprüche, bei dem die strahlformende Einrichtung und die einstellbare Optik (5) in einem Laser-Resonator (9) angeordnet sind.

8. Verfahren nach einem der vorhergehenden Ansprüche, bei dem der Laserstrahl (1) während der Justage auf den Detektor (6a) ausgerichtet wird oder bei dem ein Leistungsanteil (P_{D}) des Laserstrahls (1) dauerhaft auf den Detektor (6a) gelenkt wird.

9. Vorrichtung (3, 3a) zur Bereitstellung eines justierten Laserstrahls (1), umfassend:
eine strahlformende Einrichtung (4),
eine Detektoreinrichtung (6) mit mindestens einem ortsauflösenden Detektor (6a) zum Vermessen eines Strahlprofils (15, 16) des Laserstrahls (1) nach dem Durchlaufen der strahlformenden Einrichtung (4),
eine Auswerteeinrichtung (7) zum Ermitteln einer Strahlqualitätseigenschaft (D) des Laserstrahls (1), wobei die Auswerteeinrichtung (7) ausgebildet ist, als Strahlqualitätseigenschaft eine Abweichung (D) einer Intensitätsverteilung (I(x,y)) des Laserstrahls (1) auf dem Detektor (6a) von einer vorgegebenen Intensitätsverteilung zu bestimmen, sowie
eine einstellbare Optik (5) zur Veränderung mindestens einer Eigenschaft (x_{P}, y_{P}, δ) des Laserstrahls (1) vor dem Eintreten in die strahlformende Einrichtung (4),
wobei die Auswerteeinrichtung (7) ausgebildet ist, zur Justage des Laserstrahls (1) die einstellbare Optik (5) in Abhängigkeit von der ermittelten Strahlqualitätseigenschaft (D) insbesondere mehrmals zu verstellen, bis die Strahlqualitätseigenschaft (D) einen vorgegebenen Wert (D_{S}) erreicht, wobei die die strahlformende Einrichtung (4) ausgewählt ist aus der Gruppe umfassend: optischer Verstärker, optischer Isolator, optischer Polarisator und optische Verzögerungsstrecke.

10. Vorrichtung nach Anspruch 9, bei welcher die einstellbare Optik (5) zur Veränderung der mindestens einen Eigenschaft des Laserstrahls (1) mindestens ein verstellbares optisches Element, insbesondere mindestens eine verstellbare Linse (11b) und/oder mindestens einen verstellbaren Spiegel (12a,b), aufweist.

11. Vorrichtung nach einem der Ansprüche 9 bis 10, weiter umfassend:
ein schaltbares optisches Element (13) zur Ausrichtung des Laserstrahls (1) auf den Detektor (6a) während der Justage und/oder
eine Strahlteiler-Einrichtung (14) zum Lenken eines Leistungsanteils (P_{D}) des Laserstrahls (1) auf den Detektor (6a).

12. Vorrichtung nach einem der Ansprüche 9 bis 11, bei der die Auswerteeinrichtung (7) ausgebildet ist, als Strahlqualitätseigenschaft eine Abweichung (D) einer Intensitätsverteilung (I(x,y)) des Laserstrahls (1) auf dem Detektor (6a) von einer Gauss-Intensitätsverteilung (I_{G}(x, y)) zu bestimmen.

13. Vorrichtung nach einem der Ansprüche 9 bis 12, bei der die Auswerteeinrichtung (7) ausgebildet ist, beim Ermitteln der Abweichung (D) in Form einer Fehlerfunktion mindestens ein Parameter (I₀, x₀, y₀, w₀) der vorgegebenen Intensitätsverteilung (I_{G}(x, y)) zu variieren.

14. Optische Anordnung, insbesondere EUV-Strahlungserzeugungsvorrichtung (20), umfassend:
mindestens zwei Vorrichtungen (3, 3a) nach einem der Ansprüche 9 bis 13, die bevorzugt im Strahlweg des Laserstrahls (1) aufeinander folgend angeordnet sind.

## Claims

1. A method for adjusting a laser beam (1), comprising:
measuring a beam profile (15, 16) of the laser beam (1) after it has passed through a beam-shaping device (4) by means of at least one spatially resolving detector (6a) of a detector device (6);
determining a beam quality characteristic (D) of the laser beam (1), wherein the beam quality characteristic is determined as a deviation (D) of an intensity distribution (I(x,y)) of the laser beam (1) on the detector (6a) from a predetermined intensity distribution, and
adjusting an adjustable optics (5) to alter at least one characteristic (x_{P}, y_{P}, δ) of the laser beam (1) prior to its entry into the beam-shaping device (4),
wherein, for the purpose of adjusting the laser beam (1), the adjustable optics (5) is adjusted, in particular several times, in dependence on the determined beam quality characteristic (D) until the beam quality characteristic (D) reaches a predetermined value (Ds), wherein the beam-shaping device (4) is selected from the group comprising: an optical amplifier, an optical isolator, an optical delay line, an optical polariser.

2. The method according to claim 1, in which, when adjusting the laser beam (1), the beam quality characteristic (D) is maximised or minimised.

3. A method according to claim 1 or 2, in which the beam quality characteristic is determined as a deviation (D) of an intensity distribution (I(x,y)) of the laser beam (1) on the detector (6a) from a Gaussian intensity distribution (I_{G}(x,y)).

4. A method according to any one of the preceding claims, in which, when determining the deviation (D) in the form of an error function, at least one parameter (I₀, x₀, y₀, w₀) of the specified intensity distribution (I_{G}(x, y)) is varied.

5. A method according to any one of the preceding claims, in which, when adjusting the adjustable optics (5), a beam position (x_{P}, y_{P}) of the laser beam (1), an alignment (δ) of the laser beam (1), a caustic of the laser beam (1) and/or an aberration of the laser beam (1) are adjusted.

6. A method according to any one of the preceding claims, in which, when adjusting the laser beam (1), at least one optical element, in particular at least one mirror (12a, b) and/or at least one lens (11b), of the adjustable optics (5) is/are adjusted.

7. A method according to any one of the preceding claims, in which the beam-shaping device and the adjustable optics (5) are arranged in a laser resonator (9).

8. A method according to any one of the preceding claims, in which the laser beam (1) is aligned with the detector (6a) during adjustment, or in which a power fraction (P_{D}) of the laser beam (1) is continuously directed onto the detector (6a).

9. A device (3, 3a) for providing an adjusted laser beam (1), comprising:
a beam-shaping device (4),
a detector device (6) with at least one spatially resolving detector (6a) for measuring a beam profile (15, 16) of the laser beam (1) after it has passed through the beam-shaping device (4),
an evaluation means (7) for determining a beam quality characteristic (D) of the laser beam (1), wherein the evaluation means (7) is configured to determine, as a beam quality characteristic, a deviation (D) of an intensity distribution (I(x,y)) of the laser beam (1) on the detector (6a) from a predetermined intensity distribution, and
an adjustable optics (5) for modifying at least one characteristic (x_{P}, y_{P}, δ) of the laser beam (1) prior to its entry into the beam-shaping device (4),
wherein the evaluation device (7) is configured, for the purpose of adjusting the laser beam (1), to adjust the adjustable optics (5) in dependence on the determined beam quality characteristic (D), in particular several times, until the beam quality characteristic (D) reaches a predetermined value (D_{S}), wherein the beam-shaping device (4) is selected from the group comprising: an optical amplifier, an optical isolator, an optical polariser and an optical delay line.

10. A device according to claim 9, in which the adjustable optics (5) for modifying the at least one characteristic of the laser beam (1) comprises at least one adjustable optical element, in particular at least one adjustable lens (11b) and/or at least one adjustable mirror (12a, b).

11. A device according to any one of claims 9 to 10, further comprising:
a switchable optical element (13) for aligning the laser beam (1) with the detector (6a) during adjustment and/or
a beam splitting device (14) for directing a power fraction (P_{D}) of the laser beam (1) onto the detector (6a).

12. A device according to any one of claims 9 to 11, in which the evaluation means (7) is configured to determine, as a beam quality characteristic, a deviation (D) of an intensity distribution (I(x,y)) of the laser beam (1) on the detector (6a) from a Gaussian intensity distribution (I_{G}(x, y)).

13. A device according to any one of claims 9 to 12, in which the evaluation unit (7) is configured to vary, when determining the deviation (D) in the form of an error function, at least one parameter (I₀, x₀, y₀, w₀) of the specified intensity distribution (I_{G}(x, y)).

14. An optical arrangement, in particular an EUV radiation generation device (20), comprising:
at least two devices (3, 3a) according to any one of claims 9 to 13, which are preferably arranged in series in the beam path of the laser beam (1).

## Revendications

1. Procédé d'ajustage d'un faisceau laser (1), comprenant :
la mesure d'un profil de faisceau (15, 16) du faisceau laser (1) après le passage à travers un dispositif de formation de faisceau (4) au moyen d'au moins un détecteur à résolution spatiale (6a) d'un dispositif de détection (6).
la détermination d'une caractéristique de qualité de faisceau (D) du faisceau laser (1), la caractéristique de qualité de faisceau étant déterminée comme un écart (D) d'une répartition d'intensité (I(x,y)) du faisceau laser (1) sur le détecteur (6a) par rapport à une répartition d'intensité prédéfinie, ainsi que
l'ajustement d' une optique réglable (5) pour modifier au moins une propriété (x_{P}, y_{P}, δ) du faisceau laser (1) avant l'entrée dans le dispositif de formation de faisceau (4),
le faisceau laser (1) étant ajusté en ajustant l'optique réglable (5) en fonction de la caractéristique de qualité de faisceau (D) déterminée, en particulier plusieurs fois, jusqu'à ce que la caractéristique de qualité de faisceau (D) atteigne une valeur prédéfinie (D_{S}), le dispositif de formation de faisceau (4) étant choisi dans le groupe comprenant : amplificateur optique, isolateur optique, ligne à retard optique, polariseur optique.

2. Procédé selon la revendication 1, dans lequel lors de l'ajustage du faisceau laser (1), la caractéristique de qualité de faisceau (D) est maximisée ou minimisée.

3. Procédé selon la revendication 1 ou 2, dans lequel la caractéristique de qualité de faisceau est déterminée comme un écart (D) d'une répartition d'intensité (I(x,y)) du faisceau laser (1) sur le détecteur (6a) par rapport à une répartition d'intensité gaussienne (I_{G}(x, y)).

4. Procédé selon l'une des revendications précédentes, dans lequel lors de la détermination de l'écart (D) sous forme d'une fonction d'erreur, au moins un paramètre (I₀, x₀, y₀, w₀) de la répartition d'intensité prédéfinie (I_{G}(x, y)) est varié.

5. Procédé selon l'une des revendications précédentes, dans lequel lors de l'ajustage de l'optique réglable (5), une position du faisceau (x_{P}, y_{P}) du faisceau laser (1), une orientation (δ) du faisceau laser (1), une caustique du faisceau laser (1) et/ou un défaut d'imagerie du faisceau laser (1) sont réglés.

6. Procédé selon l'une des revendications précédentes, dans lequel lors de l'ajustage du faisceau laser (1), au moins un élément optique, en particulier au moins un miroir (12a,b) et/ou au moins une lentille (11b), de l'optique réglable (5) est ajusté.

7. Procédé selon l'une des revendications précédentes, dans lequel le dispositif de formation de faisceau et l'optique réglable (5) sont disposés dans un résonateur laser (9).

8. Procédé selon l'une des revendications précédentes, dans lequel le faisceau laser (1) est aligné sur le détecteur (6a) pendant l'ajustage ou dans lequel une fraction de puissance (P_{D}) du faisceau laser (1) est dirigée en permanence sur le détecteur (6a).

9. Dispositif (3, 3a) pour la fourniture d'un faisceau laser ajusté (1),comprenant:
un dispositif de formation de faisceau (4),
un dispositif de détection (6) avec au moins un détecteur à résolution spatiale (6a) pour mesurer un profil de faisceau (15, 16) du faisceau laser (1) après le passage à travers le dispositif de formation de faisceau (4),
un dispositif d'évaluation (7) pour déterminer une caractéristique de qualité de faisceau (D) du faisceau laser (1), le dispositif d'évaluation (7) étant conçu pour déterminer comme caractéristique de qualité de faisceau un écart (D) d'une répartition d'intensité (I(x,y)) du faisceau laser (1) sur le détecteur (6a) par rapport à une répartition d'intensité prédéfinie, ainsi que
une optique réglable (5) pour modifier au moins une propriété (x_{P}, y_{P}, δ) du faisceau laser (1) avant l'entrée dans le dispositif de formation de faisceau (4),
le dispositif d'évaluation (7) étant conçu pour ajuster le faisceau laser (1) en ajustant l'optique réglable (5) en fonction de la caractéristique de qualité de faisceau (D) déterminée, en particulier plusieurs fois, jusqu'à ce que la caractéristique de qualité de faisceau (D) atteigne une valeur prédéfinie (D_{S}),
le dispositif de formation de faisceau (4) étant choisi dans le groupe comprenant : amplificateur optique, isolateur optique, polariseur optique et ligne à retard optique.

10. Dispositif selon la revendication 9, dans lequel l'optique réglable (5) pour modifier au moins une propriété du faisceau laser (1) comprend au moins un élément optique réglable, en particulier au moins une lentille réglable (11b) et/ou au moins un miroir réglable (12a,b).

11. Dispositif selon l'une des revendications 9 à 10, comprenant en outre :
un élément optique commutable (13) pour l'alignement du faisceau laser (1) sur le détecteur (6a) pendant l'ajustage et/ou
un dispositif séparateur de faisceau (14) pour diriger une fraction de puissance (P_{D}) du faisceau laser (1) sur le détecteur (6a).

12. Dispositif selon l'une des revendications 9 à 11, dans lequel le dispositif d'évaluation (7) est conçu pour déterminer comme caractéristique de qualité de faisceau un écart (D) d'une répartition d'intensité (I(x,y)) du faisceau laser (1) sur le détecteur (6a) par rapport à une répartition d'intensité gaussienne (I_{G}(x, y)).

13. Dispositif selon l'une des revendications 9 à 12, dans lequel le dispositif d'évaluation (7) est conçu pour, lors de la détermination de l'écart (D) sous forme d'une fonction d'erreur, varier au moins un paramètre (I₀, x₀, y₀, w₀) de la répartition d'intensité prédéfinie (I_{G}(x, y)).

14. Agencement optique, en particulier dispositif de génération de rayonnement EUV (20), comprenant :
au moins deux dispositifs (3, 3a) selon l'une des revendications 9 à 13, qui sont de préférence disposés successivement dans le trajet du faisceau du faisceau laser (1).
